(19) **Europäisches Patentamt**

**European Patent Office**

**Office européen des brevets**

(11) **EP 1 493 077 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(21) Anmeldenummer: **03712124.1**

(22) Anmeldetag: **01.04.2003**

(51) Int Cl.:
*G06F 7/50* *(2006.01)*

(86) Internationale Anmeldenummer:
**PCT/EP2003/003401**

(87) Internationale Veröffentlichungsnummer:
**WO 2003/085512 (16.10.2003 Gazette 2003/42)**

(54) **RECHENWERK UND VERFAHREN ZUM SUBTRAHIEREN**

ARITHMETIC UNIT AND SUBTRACTION METHOD

UNITE DE CALCUL ET PROCEDE DE SOUSTRACTION

(84) Benannte Vertragsstaaten:
**DE FR**

(30) Priorität: **10.04.2002 DE 10215784**

(43) Veröffentlichungstag der Anmeldung:
**05.01.2005 Patentblatt 2005/01**

(73) Patentinhaber: **Infineon Technologies AG**
**81669 München (DE)**

(72) Erfinder:
• **ELBE, Astrid**
**81243 München (DE)**
• **JANSSEN, Norbert**
**81667 München (DE)**

• **SEDLAK, Holger**
**82054 Lochhofen/Sauerlach (DE)**
• **SEIFERT, Jean-Pierre**
**6574 Pettneu am Arlberg (AT)**

(74) Vertreter: **Zinkler, Franz**
**Patentanwälte Schoppe, Zimmermann, Stöckeler & Zinkler,**
**Postfach 246**
**82043 Pullach bei München (DE)**

(56) Entgegenhaltungen:
DE-A- 3 631 992    GB-A- 2 215 496
US-A- 3 987 291    US-A- 4 623 981
US-A- 4 817 031

**Beschreibung**

Die vorliegende Erfindung bezieht sich auf Langzahlrechenwerke und insbesondere auf Langzahlrechenwerke mit begrenztem Übertragpfad (Carrypfad).

Die DE 3631992 C2 offenbart einen Kryptographieprozessor zur effizienten Ausführung des Public-Key-Verfahrens von Rivest, Shamir und Adleman, das auch als RSA-Verfahren bekannt ist. Die in diesem Verfahren erforderliche modulare Exponentiation wird unter Verwendung eines Multiplikations-Vorausschau-Verfahrens und eines Reduktions-Vorausschau-Verfahrens berechnet. Hierzu wird ein Drei-Operanden-Addierer verwendet. Der offenbarte Drei-Operanden-Addierer hat eine Länge von 660 Bits. Eine Elementarzelle besteht aus mehreren Kryptoregistern, einem Schieber, einem Halb-Addierer, einem VollAddierer und einem Carry-Look-Ahead-Element. Vier derartige Elementarzellen bilden einen Vier-Zellen-Block, wobei dem Vier-Zellen-Block ein Carry-Look-Ahead-Element zugeordnet ist. Fünf derartige Vier-Zellen-Blöcke bilden einen 20-Zellen-Block. Die Verschlüsselungseinheit besteht insgesamt aus 33 solchen 20-Zellen-Blöcken und einer Steuereinheit, die einen Taktgenerator zum Takten der Elementarzellen umfaßt. Die Carry-Look-Ahead-Elemente der Vier-Zellen-Blöcke sind zusammengeschaltet, um zu erkennen, ob sich ein Carry, d. h. ein Übertrag, über eine größere Distanz, nämlich 20 Bits, ausbreitet. Wenn ein Propagate-Signal des 20-Bit-Blocks aktiv ist, so bedeutet dies, daß der Übertrag der betrachteten 20-Bit-Blocks von einem Übertrag am Ausgang des vorausgehenden Blocks abhängt. Wenn das Propagate-Signal eines 20-Bit-Blocks dagegen nicht aktiv ist, bedeutet dies, daß ein möglicherweise vorhandenes Carry am Ausgang dieses Blocks, d. h. am höchstwertigen Bit dieses Blocks, innerhalb dieses Blocks erzeugt worden ist, jedoch nicht durch den vorausgehenden Block beeinflußt ist.

Damit ist es möglich, den Takt des Rechenwerks, d. h. die Rate, mit der neue Eingangsoperanden eingespeist werden, schneller zu machen als den Worst-Case-Fall, bei dem sich der Carrypfad vom niederstwertigen Bit des gesamten Rechenwerks bis zum höchstwertigen Bit des gesamten Rechenwerks erstreckt. Wird ein Propagate-Signal für einen 20-Bit-Block aktiviert, so wird der Takt des gesamten Rechenwerks so verlangsamt, daß der Worst-Case-Fall berücksichtigt wird, d. h. das Rechenwerk wird so lange angehalten, bis sich ein Carry vom niederstwertigen Bit des gesamten Rechenwerks bis zum höchstwertigen Bit des gesamten Rechenwerks ausgebreitet hat.

Die Zykluszeit, d. h. die Zeit, nach der nächste Eingangsoperanden in das Rechenwerk eingespeist werden, wird daher so eingestellt, daß sie gerade ausreicht, um den Übertrag direkt benachbarter Blöcke zu verarbeiten. Dies hat den Vorteil, daß unabhängig von der Anzahl der Stellen des Rechenwerks nur die Zeit eines Block-Übertrags berücksichtigt zu werden braucht. Wenn dagegen festgestellt wird, daß der Übertrag des aktuellen Blocks nicht nur vom vorherigen Block, sondern von dem dem vorherigen Block vorausgehenden Block beeinträchtigt wird, so wird die Zykluszeit so langsam gemacht, daß für einen vollständigen Carry-Pfad ausreichend Zeit vorhanden ist.

Das beschriebene Konzept ist insofern vorteilhaft, daß nicht mehr die Länge des Rechenwerks die Geschwindigkeit bestimmt, sondern die Geschwindigkeit mit der Länge eines Blocks, d. h. mit der Länge des zu erwartenden Carry-Pfäds korrespondiert - allerdings auch mit der Anzahl der Blöcke.

Das beschriebene Verfahren ist jedoch dahingehend nachteilhaft, daß, wenn festgestellt wird, daß sich ein Carry über eine längere Distanz als einen Block ausbreitet, d. h. wenn ein sogenanntes Panik-Signal erzeugt wird, das Rechenwerk insgesamt angehalten wird, um den Worst-Case-Fall zu berücksichtigen. Wird daher die Länge eines Blocks kurz gewählt, was an sich wünschenswert ist, da die Taktperiode dann erhöht werden kann (die Zykluszeit kann verringert werden), so wird kein wesentlicher Geschwindigkeitsgewinn mehr eintreten, da Panik-Signale häufiger auftreten, so daß das Rechenwerk insgesamt durch den ständigen Panikfall "ausgebremst" wird.

Wird dagegen die Länge eines Blocks relativ lang gewählt, um die Anzahl der Panik-Fälle zu verringern bzw. nahezu zu eliminieren, muß damit einhergehend auch die Zykluszeit erhöht werden, da dieselbe so groß sein muß, daß maximal der Fall berücksichtigt wird, bei dem ein Übertrag im zweitniederstwertigen Bit des vorausgehenden Blocks erzeugt wird, den vorausgehenden Block durchläuft und ferner den aktuellen Block durchläuft.

Eine kurze Blocklänge führt somit zwar zu einer höheren Taktrate, führt jedoch insgesamt wieder zu einer reduzierten Performance des Rechenwerks aufgrund der stark zunehmenden Anzahl von Panikfällen. Eine lange Zykluszeit, d. h. eine geringe Taktrate, führt dagegen zu einer abnehmenden Anzahl von Panik-Fällen, ist jedoch dahingehend nicht wünschenswert, daß aufgrund der geringen Taktrate in einer bestimmten Zeit auch nur eine begrenzte Anzahl von Additionsvorgängen durchgeführt werden kann.

Für den Zusammenhang der Wahrscheinlichkeit für ein Panik-Ereignis gilt folgende Gleichung, die die vorstehenden Ausführungen zusammenfaßt:

$$P = 1 - (1-2^{-BL})^{(NBL-2)}.$$

In der obigen Gleichung ist P die Wahrscheinlichkeit für das Auftreten eines Panik-Ereignisses, ist BL die Blocklänge und ist NBL die Anzahl der Blöcke.

Nachteilig an dem beschriebenen Rechenwerk mit begrenztem Carrypfad ist die Tatsache, daß eine Subtraktion nicht ohne weiteres ausführbar ist. Die Subtraktion:

$$c = a - b$$

wird typischerweise nicht unmittelbar ausgerechnet, sondern indem der Parameter b invertiert wird und dann der invertierte Parameter b zu a summiert wird:

$$c = a + (-b).$$

Die Negation des Parameters b wird typischerweise dadurch erreicht, daß der Operand b in seiner im Register gespeicherten Form invertiert wird, und daß dann eine Eins hinzuaddiert wird:

$$c = a + (\overline{b} + 1)$$

Wenn das LSB des Operanden b, der invertiert worden ist, typischerweise auf das niederstwertige Bit des niederstwertigen Addiererblocks fällt, stellt die Inversion des Operanden b kein Problem dar. Wenn dagegen ein Rechenwerk verwendet wird, dessen Länge in Bits größer als die Anzahl der Bits der zu subtrahierenden Operanden ist, kann und wird der Fall auftreten, daß das LSB der beiden zu verarbeitenden Operanden nicht mehr mit dem niederstwertigen Bit des niederstwertigen Addiererblocks zusammenfällt, sondern auf ein höherwertiges Bit des niederstwertigen Addiererblocks oder sogar in einen höherwertigen Addiererblock fällt. Die Bits unterhalb des gerade aktuellen niederstwertigen Bits sind auf 0 gesetzt.

Wenn nunmehr das Register, in dem der Operand b gespeichert ist, invertiert wird, so werden die eigentlich bedeutungslosen Bits unterhalb des niederstwertigen Bits (LSB) des Operanden b zu Eins gesetzt. Dies führt dazu, daß, wenn keine Gegenmaßnahmen getroffen werden, ein Panik-Signal ausgelöst wird, da sämtliche Propagate-Werte der Addiererblöcke unterhalb des Blocks, in dem sich das niederstwertige Bit befindet, gleich 1 sind. Eine Subtraktion würde daher automatisch zu einer "Vollabbremsung" des Rechenwerks führen.

Um diesen Fall zu unterbinden wird bei dem bekannten Kryptographieprozessor, der beispielsweise unter der Bezeichnung "Advanced Crypto Engine" bei der Infineon Technologies AG, Sankt-Martin-Str. 53, 81669 München, Bundesrepublik Deutschland, erhältlich ist, eine komplette Abschaltung der Addiererblöcke unterhalb des Blocks, in dem sich das niederstwertige Bit des zweiten Operanden b befindet, bewirkt. Dies wird mittels eines speziellen Befehls durchgeführt, der beim ACE als "Adjust CU" bezeichnet wird.

Nachteilig an dieser Lösung ist, daß sie nur im Rahmen einer Rechnung, z. B. einer kompletten Multiplikation, mit festem niederstwertigem Bit möglich ist. Dies bedingt unmittelbar, daß das Rechenwerk für Look-Ahead-Algorithmen einen Overflowbuffer zum Schieben der Operanden braucht.

Nachteilig an einem Rechenwerk mit Overflowbuffer ist, daß man eventuell einen ungenutzten Bereich hat, den man zum Schieben bzw. als Underflowbuffer verwenden kann.

Die Aufgabe der vorliegenden Erfindung besteht darin, ein günstigeres Konzept zum Implementieren einer Subtraktion zu schaffen.

Diese Aufgabe wird durch ein Rechenwerk nach Patentanspruch 1 oder durch ein Verfahren zum Subtrahieren nach Patentanspruch 10 gelöst.

Die vorliegende Erfindung basiert auf der Erkenntnis, daß die Realisierung eines Underflowbuffers zu einer Vereinfachung eines Rechenwerks beiträgt, das auf Look-Ahead-Algorithmen aufbaut. Um eine Vollabbremsung des Rechenwerks aufgrund eines Paniksignals, das bewirkt wird, wenn das LSB des zu subtrahierenden Operanden nicht im niederstwertigen Addiererblock ist, zu vermeiden, wird erfindungsgemäß das Panik-Signal des bzw. der Blöcke unterhalb des Blocks, in dem sich das niederstwertige Bit befindet, deaktiviert. Es werden daher nicht die Addiererblöcke total abgeschaltet, sondern es werden lediglich die von den Addiererblöcken nach einer Inversion des Registers, in dem der zu subtrahierende Operand steht, erzeugten Panik-Signale deaktiviert, damit durch die Addiererblöcke unterhalb des Blocks, in dem sich das LSB befindet, keine Panik zu dem Taktgenerator signalisiert werden kann.

Die durch die Subtraktion bedingte Hinzuaddition einer "1" wird erfindungsgemäß dadurch bewirkt, daß in den Block, in dem sich das niederstwertige Bit befindet, eine 1 als Eingangs-Übertrag eingespeist wird. Unabhängig davon, in welcher Elementarzelle des Blocks sich das niederstwertige Bit des zu subtrahierenden Operanden tatsächlich befindet, wird die Addition mit 1 korrekt ausgeführt, da sämtliche Bits unterhalb des niederstwertigen Bits in dem Addiererblock aufgrund der Inversion zu "1" gesetzt sind und der eingespeiste Übertrag automatisch an seine richtige Stelle "rippeln" wird.

Es wird ferner bevorzugt, auch das Panik-Signal des Blocks, in dem sich das niederstwertige Bit befindet, zu deaktivieren, da es sich hier um den niedersten "aktiven" Addiererblock handelt, dessen Übertragpfad auf keinen Fall länger sein kann als die gesamte Blocklänge.

Darüber hinaus wird es bevorzugt, um die Addiererblöcke unterhalb des niederstwertigen Bits wieder in ihren Ausgangszustand zu versetzen, d. h. daß die Bits unterhalb des niederstwertigen Bits auf 0 gesetzt sind, in jeden Addiererblock als Eingangs-Übertrag eine "1" einzuspeisen, um das Ergebnis-register der entsprechenden Addiererblöcke auf 0 zu setzen. Schließlich wird, um zu vermeiden, daß diese Maßnahme wieder auf den Block mit dem niederstwertigen Bit eine Auswirkung hat, der Übertrag-Eingang des Blocks, in dem sich das niederstwertige Bit befindet, vom Übertrag-Ausgang des nächstniederwertigen Addiererblocks getrennt.

Prinzipiell wird es genügen, in den Übertrag-Eingang des niederstwertigen Addiererblocks eine "1" einzuspeisen, um sämtliche Stellen im Ergebnis-Register des Rechenwerks unterhalb des LSB auf "0" zu bringen. Diese Maßnahme wird jedoch schneller erreicht, wenn jedem Addiererblock unterhalb des Blocks, in dem sich das LSB des Operanden befindet, separat ein Übertrag-Eingangssignal eingespeist wird. In diesem Fall sind dann die Übertrag-Ausgänge sämtlicher Blöcke unterhalb des Addiererblocks mit dem niederstwertigen Bit zu blockieren, d. h. an einer Ausbreitung in den nächsthöheren Addiererblock zu hindern.

Ein Vorteil der vorliegenden Erfindung besteht darin, daß nunmehr durch adaptive Behandlung der Addiererblöcke unterhalb des niederstwertigen Bits von Zyklus zu Zyklus des Rechenwerks die volle Breite des Rechenwerks ausgenutzt werden kann. Dies ermöglicht es, nunmehr mit variablem Underflowbuffer zu arbeiten, was verschiedene Look-Ahead-Algorithmen in der Implementierung einfacher und schneller macht. Insbesondere der zweifache Look-Ahead-Algorithmus sowohl für die Multiplikation als auch für die modulare Reduktion des ZDN-Verfahrens, das in dem zitierten Deutschen Patent beschrieben ist, kann nunmehr effizienter und schneller stattfinden.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Rechenwerk, in dem die vorliegende Erfindung eingesetzt werden kann;

Fig. 2    ein Blockschaltbild eines Rechenwerks zur Erläuterung der vorliegenden Erfindung; und

Fig. 3a bis 3e    eine Darstellung der Situation im Ergebnisregister des Rechenwerks abhängig von verschiedenen erfindungsgemäßen Maßnahmen.

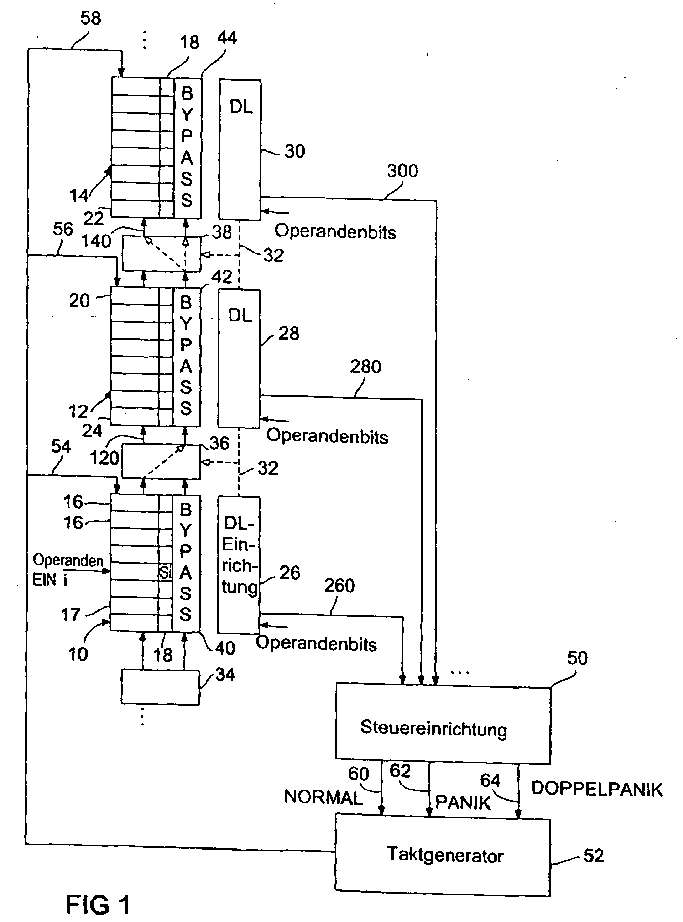

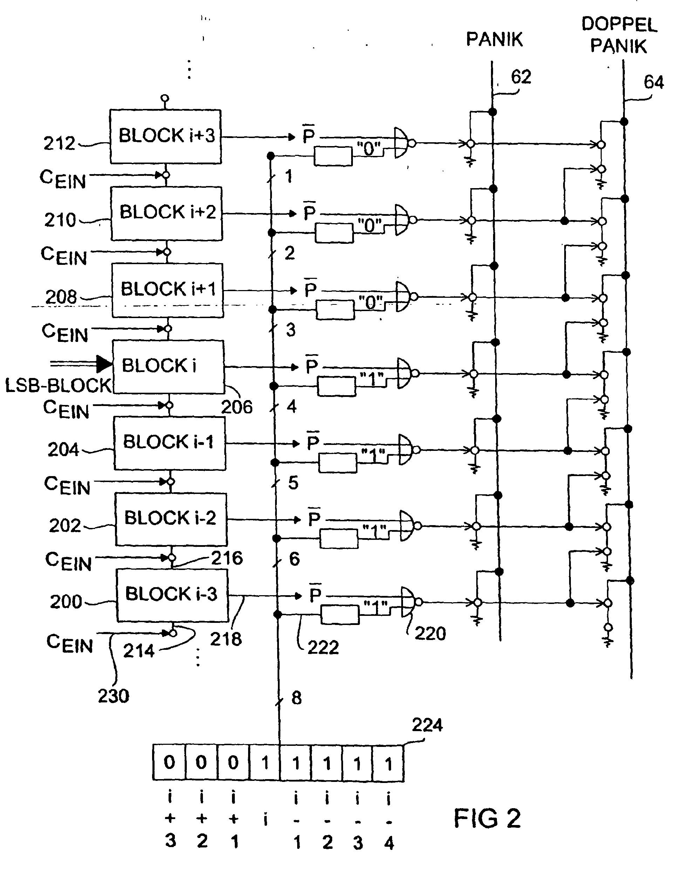

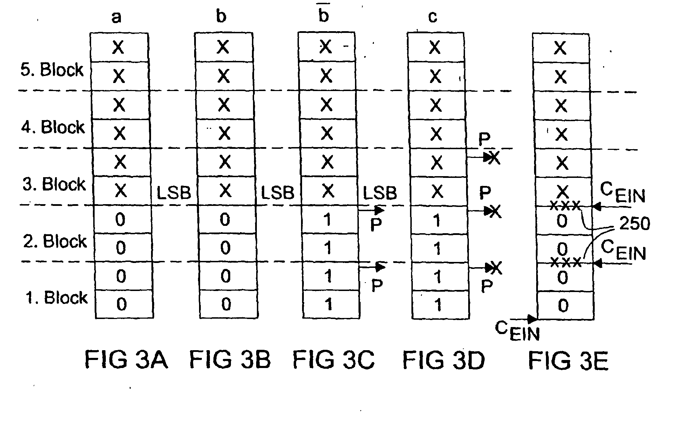

Bevor anhand der Fig. 2 und 3a bis 3e auf die erfindungsgemäße Behandlung der Addiererblöcke unterhalb des Blocks, in dem das niederstwertige Bit des Operanden enthalten ist, eingegangen wird, wird zunächst anhand von Fig. 1 ein Rechenwerk beschrieben, in dem die erfindungsgemäßen Maßnahmen vorteilhaft eingesetzt werden können. Obgleich in Fig. 1 ein Rechenwerk mit einer Panikhierarchie beschrieben ist, kann die vorliegende Erfindung auch in einem Rechenwerk mit einer einfachen Panik-Steuerung eingesetzt werden, um es einem solchen Rechenwerk zu ermöglichen, in jedem Zyklus die gesamte Breite des Rechenwerks zu verwenden.

Fig. 1 zeigt ein erfindungsgemäßes Rechenwerk mit einem ersten Addiererblock 10, einem zweiten Addiererblock 12 und einem dritten Addiererblock 14. Die drei Addiererblöcke 10, 12, 14 sind typischerweise Addiererblöcke eines Rechenwerks mit einer wesentlich größeren Anzahl von Addiererblöcken, beispielsweise 64 für ein Rechenwerk mit einer Gesamtlänge von 1024 Bits, wobei ein Block 16 Elementarzellen umfaßt, oder 128 für ein Rechenwerk mit 2048 Bit, wenn ein Addiererblock eine Länge von 16 Bit hat. Solche Rechenwerkslängen sind erforderlich, um das RSA-Verfahren mit entsprechenden Schlüssellängen von 1024 oder 2048 Bits durchführen zu können. In der Elliptische-Kurven-Kryptographie kann eine entsprechende Sicherheit mit wesentlich geringeren Schlüssellängen erreicht werden, wie z. B. 160 Bit, wobei hierzu 10 Addiererblöcke a 16 Bits ausreichend sind.

Jeder Addiererblock 10, 12, 14 besteht aus einer Anzahl von Elementarzellen 16, die typischerweise identisch aufgebaut sind. Jede Elementarzelle kann, wie es auch im Stand der Technik der Fall ist, Register zum Speichern von 2, 3 oder mehreren Operanden, einen Schieber und einen Addierer umfassen, und umfaßt typischerweise auch ein Ausgangsregister zum Speichern eines Summenbits der Operation $S_i$, wie es in Fig. 1 bei 18 gezeigt ist. Der Addierer innerhalb einer Elementarzelle kann je nach Bedarf ein Ein-Bit-Volladdierer sein, d. h. ein Addierer, der als Eingangsgrößen zwei Bits sowie einen Übertrag einer niederwertigen Elementarzelle empfängt, und der als Ausgangsgrößen ein Summenbit $S_i$ sowie einen Übertrag für die höherwertige benachbarte Elementarzelle ausgibt. Alternativ kann der Addierer innerhalb einer Elementarzelle auch eine Kombination aus einem Halbaddierer und einem Volladdierer sein, um eine Drei-Operanden-Operation zum Summieren von drei unterschiedlichen Operanden durchzuführen. Sämtliche verwendeten Addierer innerhalb einer Elementarzelle haben die Eigenschaft, daß sie ein Übertragbit an die nächsthöhere Elementarzelle liefern, daß sie ein Summenbit $S_i$ liefern, und daß sie einen Übertrag einer nächstniedrigeren Elementarzelle empfangen.

Wie es in Fig. 1 gezeigt ist, sind die Addiererblöcke 10, 12, 14 derart miteinander verschaltet, daß immer die höchstwertige Elementarzelle, wie z. B. die Elementarzelle 20 des zweiten Addiererblocks 12, mit der niederstwertigen Elementarzelle 22 des dritten Addiererblocks 14 verbunden ist. Entsprechend ist die niederstwertige Elementarzelle 24 mit der höchstwertigen Elementarzelle 16 des ersten Addiererblocks 10 verbunden.

Jeder Addiererblock umfaßt ferner eine Übertrag-Durchlaufeinrichtung 26, 28 bzw. 30, die als Eingangssignal die Operandenbits des Ein-Bit-Volladdierers innerhalb einer Elementarzelle empfängt, und die ausgangsseitig ein Paniksignal 260, 280, 300 liefert.

Wie später ausgeführt wird, liefert jede DurchlaufEinrichtung ferner ein Steuersignal 32,' um eine entsprechende Übertrag-Steuereinrichtung 34, 36, 38 zu veranlassen, einen Übertrag auf einen Übertrag-Bypass (Übertrag-Umweg) 40, 42 oder 44 zu legen bzw. einen Übertrag von einem nächstniedrigeren Block nicht von der höchstwertigen Elementarzelle dieses Blocks zu nehmen, sondern von dem Übertrag-Bypass dieses Blocks, wenn auf den Übertrag-Bypass ein Übertrag gelegt worden ist.

Das erfindungsgemäße Rechenwerk umfaßt ferner eine Steuereinrichtung 50 sowie einen Taktgenerator 52, der über Taktsteuerleitungen 54, 56, 58 den Takt bzw. die Taktperiode steuert, mit der neue Eingangsoperanden in die Elementarzellen der Addiererblöcke eingespeist werden.

Bei dem in Fig. 1 gezeigten Ausführungsbeispiel kann der Taktgenerator mit drei verschiedenen Geschwindigkeiten laufen, einmal mit einer schnellen Geschwindigkeit in einem Normalzustand 60, alternativ hierzu mit einer mittleren Geschwindigkeit 62 im Falle einer Panik und mit einer langsamen Geschwindigkeit 64 im Falle einer Doppel-Panik.

Im nachfolgenden wird auf den Betrieb des in Fig. 1 gezeigten Rechenwerks eingegangen. Zunächst wird davon ausgegangen, daß der Normalfall existiert, d. h. daß das Rechenwerk vom Taktgenerator 52 mit der Normalgeschwindigkeit 60 getaktet wird. Der Normalfall liegt dann vor, wenn keine der Durchlauf-Einrichtungen 26, 28, 30 bestimmt, daß ein Übertrag einen gesamten Addiererblock 10, 12, 14 durchläuft. Dies bedeutet, in anderen Worten, daß in jedem Addiererblock eine Elementarzelle vorhanden ist, die einen möglicherweise auf dieselbe auftreffenden Übertrag absorbiert.

Ob eine Elementarzelle einen Übertrag absorbiert, einen Übertrag erzeugt oder einen Übertrag weder absorbiert noch erzeugt, sondern einfach weiterleitet, kann mittels der sogenannten Carry-Look-Ahead-Parameter Kill, Generate und Propagate berechnet werden. Dies ist in der Technik bekannt und beispielsweise in "Computer Architecture a Qualitative Approach", Hennessy & Patterson, Second Edition, Morgan Kaufmann Publishers, Inc., 1996, Anhang A, beschrieben.

Für eine Zwei-Operanden-Addition werden die Carry-Look-Ahead-Parameter folgendermaßen berechnet:

Der Kill-Parameter gibt an, daß ein Übertrag, der möglicherweise von einer niederwertigen Elementarzelle kommt, absorbiert wird. Der Kill-Parameter berechnet sich aus der UND-Verknüpfung der beiden Eingangsoperandenbits und ist aktiv, wenn die UND-Verknüpfung der Eingangsoperandenbits eine 0 ergibt.

Der Generate-Parameter berechnet sich ebenfalls aus der UND-Verknüpfung der Eingangsoperanden und zeigt an, daß diese Elementarzelle einen Übertrag erzeugen wird. Der Generate-Parameter ist aktiv, wenn die UND-Verknüpfung der beiden Eingangsoperandenbits eine 1 ergibt.

Der Propagate-Parameter wird aus der ODER-Verknüpfung der beiden Eingangsoperandenbits für eine Elementarzelle berechnet und zeigt an, daß ein Übertrag eine Elementarzelle einfach durchlaufen würde. Der Propagate-Parameter ist aktiv, wenn die ODER-Verknüpfung der beiden Eingangsbits für die Elementarzelle gleich 1 ist.

Eine bevorzugte Implementation einer Durchlauf-Einrichtung, wie z. B. der Durchlauf-Einrichtung 28 des zweiten Addiererblocks 12 besteht darin, daß in der Durchlauf-Einrichtung sämtliche Propagate-Parameter der Elementarzellen UNDverknüpft werden. Ein Panik-Signal 280 wird dann ausgegeben, wenn die Durchlaufeinrichtung 28 bestimmt, daß ein Übertrag den zweiten Addiererblock durchläuft, d. h. daß im zweiten Addiererblock keine Elementarzelle einen aktiven Kill-Parameter erzeugt.

In diesem Fall ist der Carry-Pfad länger als ein Addiererblock, und das Rechenwerk muß langsamer getaktet werden, wie später erläutert wird.

In dem Fall, in dem keine Durchlaufeinrichtung ein Panik-Signal erzeugt, ist es jedoch sichergestellt, daß der Übertrag-Pfad kürzer als ein Addiererblock ist, so daß das Rechenwerk mit der schnellen Normal-Geschwindigkeit 60 betrieben werden kann. In einem Takt gemäß der Normal-Geschwindigkeit 60 muß ein Block, z. B. der zweite Addiererblock 12, in der Lage sein, seine Summen-Bits $S_i$ auszugeben. Summen-Bits können erst ausgegeben werden, wenn die Überträge der nächstniedrigeren Elementarzellen vorhanden sind. Nachdem keine Durchlauf-Einrichtung ein aktives Panik-Signal erzeugt hat, und nachdem insbesondere die Durchlauf-Einrichtung 26 kein Panik-Signal erzeugt hat, ist sichergestellt, daß der Eingangs-Übertrag 120 im schlechtesten Fall in der zweitniedrigsten Elementarzelle 17 des ersten Addiererblocks erzeugt wird und dann - im schlechtesten Fall - den gesamten ersten Addiererblock durchläuft. Der Takt im Normalfall darf daher höchstens so schnell sein, daß sich der Übertrag von der zweitniedrigsten Stelle 17 des ersten Addiererblocks durch den gesamten ersten Addiererblock ausbreiten kann, und daß dann, wenn der Eingangs-Übertrag 120 in dem zweiten Addiererblock 12 vorliegt, die Summen-Bits für den zweiten Addiererblock 12 ermittelt werden können.

Die Verarbeitung im zweiten Addiererblock findet somit gewissermaßen in zwei Phasen statt. Zunächst wird der Eingangs-Übertrag 120 bestimmt. Sobald der Eingangs-Übertrag 120 bekannt ist, werden dann, in einer zweiten Phase, die Summen-Bits des zweiten Addiererblocks 12 ausgegeben. Eine ähnliche Vorgehensweise wird, hierzu parallel, mit sämtlichen anderen Blöcken durchgeführt, so daß im Normalfall, d. h. wenn kein Panik-Signal 260, 280, 300 aktiv ist, mit einem Takt getaktet werden kann, dessen Taktperiode so groß ist, daß ein Übertrag zumindest einen Teil des vorausgehenden Blocks, nämlich im Worst-Case sämtliche Elementarzellen des vorausgehenden Blocks weniger einer Elementarzelle durchlaufen kann, und ferner den gesamten aktuellen Block durchlaufen kann. In einer möglichen Implementation wird typischerweise nicht unmittelbar an diese Grenze gegangen, sondern es wird ein Sicherheitsfaktor im Bereich von 1 bis 10 % bevorzugt.

Im nachfolgenden wird auf den Fall eingegangen, bei dem eine Durchlauf-Einrichtung, wie z. B. die Durchlauf-Einrichtung 28, ein Panik-Signal 280 erzeugt. Dies bedeutet, daß der Eingangs-Übertrag 140 in den dritten Addiererblock 14 nicht durch den zweiten Addiererblock 12, sondern durch den ersten Addiererblock 10 bestimmt ist. In diesem Panik-Fall würde die Normalgeschwindigkeit des Taktgenerators zu Fehlern führen. Daher wird der Taktgenerator 52 durch die Steuereinrichtung 50 auf eine Panik-Geschwindigkeit 62 gesteuert, die etwas langsamer als im Normalfall ist. Insbesondere wird die Taktgeschwindigkeit, mit der die Operanden eingespeist werden, so eingestellt, daß sich ein Übertrag, der im schlimmsten Fall in der zweitniedrigsten Elementarzelle 17 des ersten Addiererblocks erzeugt wird, durch den zweiten Addiererblock 12 hindurch ausbreiten kann, da erst dann der Eingangs-Übertrag 140 in dem dritten Addiererblock 14 vorhanden ist. Der Panik-Takt muß ferner so langsam sein, daß dann, wenn der Übertrag 140 vorliegt, die Summen-Bits in dem dritten Addiererblock 14 ausgegeben werden können. Im Panik-Fall wird der Takt daher so langsam sein, daß der Übertrag sämtliche Elementarzellen weniger einer Elementarzelle des ersten Addiererblocks durchlaufen kann, daß der Übertrag den zweiten Addiererblock durchlaufen kann, und daß der Übertrag ferner den dritten Addiererblock 14 durchlaufen kann. In mehreren Fällen wird dieser Wert nicht unmittelbar verwendet, sondern es wird typischerweise ebenfalls ein Sicherheitsfaktor im Bereich von 1 bis 10 % zu der theoretisch maximalen Panik-Taktperiode hinzugefügt.

Es wird bevorzugt, jeden Addiererblock mit einem Carry-Bypass zu versehen. Dadurch kann die Taktperiode im Panik-Fall verringert werden. Nachdem die zweite Durchlauf-Einrichtung 28 bereits bestimmt hat, daß sich der Übertrag durch den zweiten Addiererblock 12 hindurch ausbreitet, d. h. nicht durch den zweiten Addiererblock 12 beeinflußt wird, wird der Übertrag am Ausgang des ersten Addiererblocks mittels der Übertrag-Steuereinrichtung 36 auf den Übertrag-Bypass 42 des zweiten Addiererblocks gelegt und von dort mittels der Übertrag-Steuereinrichtung 38 in die niederstwertige Stelle eingespeist, wie es durch gestrichelte Pfeile in den Blöcken 36 und 38 dargestellt ist. In diesem Fall muß die Panik-Taktperiode im Vergleich zum Normalfall nur um die Zeit länger sein, die der Übertrag benötigt, um sich über den Übertrag-Bypass 42 des zweiten Addiererblocks auszubreiten. Diese Zeit ist typischerweise wesentlich geringer als wenn ein vollständiger Übertrag-Ripple durch einen Addiererblock gewartet werden müßte, so daß die Taktperiode im Panikfall nicht sehr viel länger ist als im Normalfall.

Stellt die Steuereinrichtung 50 dagegen fest, daß zwei benachbarte Durchlauf-Einrichtungen, wie z. B. die Durchlauf-Einrichtung 28 und die Durchlauf-Einrichtung 30 bestimmt haben, daß ein Übertrag beide Blöcke durchläuft, so ist der Fall der Doppel-Panik gegeben. In diesem Fall wird der Übertrag des nächsthöheren Addiererblocks, der in Fig. 1 nicht mehr gezeigt ist, von den Elementarzellen des ersten Addiererblocks 10, und zwar im Worst-Case von der zweitniedrigsten Elementarzelle 17 des ersten Addiererblocks 10 bestimmt. In diesem Fall würde, wenn der Takt nicht reduziert wird, ein Fehler auftreten, da bereits die nächsten Operanden in das Rechenwerk eingespeist werden würden, bevor der dem zweiten Addiererblock 14 nachgeschaltete höherer Addiererblock (in Fig. 1 nicht gezeigt) mit der Ausgabe der Summenbits fertig ist.

Erfindungsgemäß wird daher bei dem hier gezeigten Ausführungsbeispiel das Rechenwerk so verlangsamt, als ob sich ein Übertrag von der niederstwertigen Stelle des gesamten Rechenwerks bis zur höchstwertigen Stelle des gesamten Rechenwerks ausbreiten würde. Um diese Zeit zu verkürzen, werden der Übertrag-Umweg 42 und der Übertrag-Umweg 44 verwendet. Nachdem die beiden Blöcke 12 und 14 den Übertrag nicht beeinflussen, wird der Übertrag durch den Block 36 auf den Übertrag-Bypass 42 gelegt und durch den Block 38 nicht, wie im vorher beschriebenen Fall, in den zweiten Addiererblock 14 eingespeist, sondern direkt auf den Übertrag-Umweg 44 des zweiten Addiererblocks geleitet. Die gesamte Dauer, die ein Übertrag von der niederstwertigen Stelle des Rechenwerks bis zur höchstwertigen Stelle des Rechenwerks benötigt, verkürzt sich somit wenigstens durch die Verwendung der beiden Übertrag-Umleitungen 42 und 44.

Es ist zu sehen, daß ein Doppel-Panikfall zu einer sehr deutlichen Abbremsung des Rechenwerks führt. Um diesen Fall noch geringer zu halten, könnte eine dritte Panik-Ebene eingeführt werden, die darin besteht, daß drei benachbarte Durchlauf-Einrichtungen, wie z. B. die Durchlauf-Einrichtungen, 26, 28, 30 bestimmen, daß ein Übertrag ihre entsprechenden Addiererblöcke unmittelbar durchläuft. Ist eine Tripel-Panik-Einrichtung vorhanden, so muß im Fall der Doppelpanik das Rechenwerk nicht auf den insgesamten Worst-Case abgebremst werden, sondern muß, in Analogie zur Einfach-Panik lediglich so stark abgebremst werden, daß der Übertrag zumindest einen Teil des ersten Addiererblocks (nämlich im schlimmsten Fall alle Bits weniger einem Bit), die beiden Übertrag-Umwege 42 und 44 sowie den nächsthöheren in Fig. 1 nicht mehr gezeigten Block durchlaufen kann. Ist somit eine Tripel-Panik-Einrichtung vorhanden, so unterscheidet sich die Taktperiode im Falle von Doppel-Panik lediglich dadurch von der Taktperiode im Fall von Einfach-Panik, daß sie die Zeitdauer länger ist, die ein Übertrag benötigt, um den Übertrag-Umweg 44 zu durchlaufen.

Beliebig viele Panik-Stufen können verwendet werden, wobei jedoch der Nutzen durch eine weitere Panikstufe im Vergleich zu dem zusätzlichen Schaltungsaufwand, um den höheren Panikfall festzustellen, immer mehr zurücktritt. Andererseits kann mit jeder höheren Panikstufe die Anzahl von Elementarzellen in einem Addiererblock immer weiter reduziert werden, was unmittelbar dazu führt, daß der Normaltakt 60 immer weiter erhöht werden kann.

Es sei darauf hingewiesen, daß die Addiererblöcke intern eine beliebige Kombination von Rechenwerken haben können. Der einfachste Fall besteht darin, daß jeder Addiererblock als einfacher Ripple-Carry-Addierer aufgebaut ist, der, zusätzlich zu einem einfachen Ripple-Carry-Addierer, pro Elementarzelle noch das Propagate-Signal erzeugen sollte, damit die Durchlauf-Einrichtung auf der Basis der Propagate-Signale arbeiten kann.

Falls sämtliche Addiererblöcke vollständig als Ripple-Carry-Addierer aufgebaut sind, so muß die Taktperiode im Normalfall zumindest so lang sein, daß ein Übertrag durch sämtliche Elementarzellen eines Addiererblocks weniger einer Elementarzelle und durch sämtliche Elementarzellen eines nachgeschalteten Addiererblocks "durchrippeln" kann.

Diese Zeit kann jedoch dadurch verkürzt werden, daß ein Addiererblock vollständig als Carry-Look-Ahead-Addierer aufgebaut wird. In diesem Fall liegt das Übertrag-Eingangsbit in den zweiten Addiererblock 12, d. h. das Übertrag-Bit 120 wesentlich schneller vor. Dieses Übertrag-Bit wird dann zu Eins berechnet, wenn in dem ersten Addiererblock 10 zumindest eine Elementarzelle einen aktiven Generate-Parameter hat, dem ausschließlich Propagate-Parameter oder Generate-Parameter folgen. Das Übertrag-Bit 120 wird dann zu Null berechnet, wenn eine Elementarzelle einen aktiven Kill-Parameter erzeugt, dem lediglich weitere Kill-Parameter oder Propagate-Parameter, jedoch keine Generate-Parameter folgen.

Carry-Look-Ahead-Addierer arbeiten zwar sehr schnell, benötigen jedoch wesentlich mehr Chipfläche. ‚Aus diesem Grund ist auch ein Kompromiß dahingehend möglich, daß kleinere Carry-Look-Ahead-Addierer-Unterblöcke gebildet werden, die gemäß einem Ripple-Carry-Addierer zusammengeschaltet werden, um einen Addiererblock 10, 12 oder 14 zu erzeugen. Die tatsächliche Addiererauslegung innerhalb eines Blocks wird von den praktischen Gegebenheiten diktiert sein.

Wie es bereits ausgeführt worden ist, ist das erfindungsgemäße Rechenwerk für Kryptographie-Prozessoren besonders geeignet, da diese typischerweise Langzahl-Rechenwerke benötigen, mit einer Länge in der Größenordnung von 160 Bit für Elliptische-Kurven-Kryptographieanwendungen oder aber mit einer Länge von in der Größenordnung von 1024 oder 2048 Bit für RSA-Berechnungen. Dies steht in deutlichem Gegensatz zu typischen 8, 16, 32 oder 64-Bit-CPUs, wie sie in Allzweckprozessoren zu finden sind.

Bezüglich der Anzahl von Elementarzellen in einem Addiererblock wird eine Zahl zwischen 8 und 16 Elementarzellen und insbesondere eine Anzahl von 16 Elementarzellen für den Fall einer zweistufigen Panik-Hierarchie bevorzugt. Ist eine dritte Panik-Hierarchie vorgesehen, so wird es bevorzugt, die Anzahl der Elementarzellen in einem Block auf beispielsweise 8 zu reduzieren, was unmittelbar mit einer doppelt so großen Normaltaktgeschwindigkeit korrespondiert. Durch Bereitstellen von Carry-Umwegen kann auch die Panik-Geschwindigkeit (im Falle einer zweistufigen Panik-Hierarchie) und/oder die Doppel-Panik-Geschwindigkeit (im Fall einer dreistufigen Panik-Hierarchie) noch annähernd so groß gehalten werden wie im Falle der Normalgeschwindigkeit, da ein Carry einen Carry-Bypass typischerweise wesentlich schneller durchläuft als den Addiererblock selbst.

Fig. 2 zeigt ein Blockschaltbild des erfindungsgemäßen Rechenwerks mit einer Anzahl von Addiererblöcken 200, 202, 204, 206, 208, 210, 212, die mit Block i-3 bis Block i+3 bezeichnet sind. Jeder Addiererblock umfaßt einen Übertrag-Eingang 214 und einen Übertrag-Ausgang 216, wobei dieselben aus Übersichtlichkeitsgründen in Fig. 2 lediglich für den Block i-3 (200) bezeichnet sind. Jeder Addiererblock umfaßt ferner einen Übertrag-Durchlauf-Ausgang 218, der einem Ausgang der Durchlauf-Einrichtung 26, 28 oder 30 von Fig. 1 entspricht, wobei diese Ausgängen in Fig. 1 mit 260, 280, 300 bezeichnet sind.

Jedem Block ist ferner eine Einrichtung zum Deaktivieren des Übertrag-Durchlauf-Ausgangs zugeordnet, wobei die Einrichtung zum Deaktivieren in Fig. 2 vorzugsweise als NOR-Gatter 220 ausgebildet ist. Das NOR-Gatter (z. B. 220) liefert lediglich ein hohes Ausgangssignal mit einem logischen Pegel von "1", wenn das Eingangssignal, d. h. das Eingangssignal 218 des Übertrag-Ausgangs einen logischen "1"-Pegel hat. Bei dem in Fig. 2 gezeigten Ausführungsbeispiel ist für das Panik-Signal, d. h. für das Signal an dem Übertrag-Ausgang 218, eine "Low-Aktiv"-Logik vorhanden. Ein Panik-Signal ist somit vorhanden, wenn an dem einen Eingang des Gatters 220 ein niedriger Spannungswert anliegt. Die Einrichtung 220 zum Deaktivieren umfaßt ferner einen Steuereingang 222, der einen hohen Spannungspegel erhält, wenn das Panik-Signal des entsprechenden Addiererblocks ausgeschaltet werden soll. Soll dagegen des Panik-Signal nicht ausgeschaltet werden, wie es bei den Blöcken i+1, i+2, i+3 der Fall ist, so liegt an dem Steuereingang eine niedrige Spannung ("0") an.

Das in Fig. 2 gezeigte Rechenwerk umfaßt ferner eine Einrichtung 224 zum Bestimmen, in welchem der Addiererblöcke ein niederstwertiges Bit des zu subtrahierenden Operanden angeordnet ist. Bei dem in Fig. 2 gezeigten Ausführungsbeispiel ist die Einrichtung 224 als ein Register ausgebildet mit einer Anzahl von Registerzellen, die gleich der Anzahl der Addiererblöcke entspricht, in denen das Panik-Signal abschaltbar sein soll. Aus der Belegung des Registers 224 ist ersichtlich, welcher Block der Block ist, in dem das niederstwertige Bit angeordnet ist. Bei dem in Fig. 2 gezeigten Beispiel ist das niederstwertige Bit im Block i angeordnet. Eine "1" in dem Register 224 bedeutet, daß das Panik-Signal des entsprechenden Addiererblocks abgeschaltet werden soll. Eine "0" in dem Register bedeutet dagegen, daß das Panik-Signal, d. h. der Übertrag-Ausgang des entsprechenden Addiererblocks, verwendet werden soll.

Bei dem in Fig. 2 gezeigten Ausführungsbeispiel werden sämtliche Blöcke unterhalb des Blocks i, d. h. des Blocks, in dem das LSB angeordnet ist, hinsichtlich ihres Paniksignals deaktiviert werden. Zudem wird bei dem in Fig. 2 gezeigten bevorzugten Ausführungsbeispiel auch das Paniksignal des Addiererblocks, in dem das LSB angeordnet ist, deaktiviert, da der Übertrag-Pfad hier ebenfalls begrenzt ist, da es sich um den niederstwertigen "aktiven" Block des Rechenwerks handelt. Diese Maßnahme ist im Falle einer Einfach-Panik-Steuerung vorteilhaft, ist jedoch nicht zwingend erforderlich, wenn der Normal-Taktzyklus so gehalten wird, daß sich ein Übertrag über zwei komplette Blöcke ausbreiten kann. Wenn der NormalTakt jedoch so gewählt wird, daß sich der Übertrag über einen Block und zumindest den Teil des vorherigen Blocks, der das niederstwertige Bit des vorherigen Blocks nicht umfaßt, ausbreiten kann, muß auch der Block 206, in dem sich das LSB befindet, deaktiviert werden.

Je nach gewählter Maßnahme ist daher der Block, in dem sich das LSB befindet, anhand der Registerzelle des Register 224 von Fig. 2 ablesbar, in der entweder die erste "0" steht, oder in der die höchste "1" steht, wie bei dem in Fig. 2 gezeigten Beispiel. Bei einer in Fig. 2 gezeigten beispielhaften Implementierung hat das Register 224 einen 8-Bit-breiten Ausgang, wobei die Steuerleitung nach jeder Zelle um ein Bit weniger breit wird, so daß, wie dies in Fig. 2 gezeigt ist, das Register unmittelbar auf die Addiererblöcke abgebildet werden kann.

Es sei darauf hingewiesen, daß auch bei Langzahlrechenwerken mit vielen Addiererblöcken nicht unbedingt in sämtlichen Addiererblöcken eine Paniksignal-Abschalteinrichtung vorhanden sein muß, da nicht die gesamte Rechenwerksbreite als Underflowbuffer vorgehalten werden muß. So werden lediglich beispielsweise die untersten acht Addiererblöcke mit den erfindungsgemäßen Maßnahmen versehen sein, da darüberliegende Addiererblöcke per Definition niemals das niederstwertige Bit des zweiten Operanden erhalten werden.

Fig. 2 zeigt ferner eine Panik-Leitung 62 sowie eine bereits auf Bit-Ebene realisierte Doppel-Panik-Leitung 64, die dann aktiv ist, wenn die Panik-Signale zweier benachbarter Addiererblöcke aktiv sind.

Für jeden Addiererblock, der der LSB-Block sein kann, ist ferner eine Einrichtung 230 vorgesehen, um einen Übertrag $C_{ein}$ in den Übertrag-Eingang des Addiererblocks einspeisen zu können. Ferner ist, wie es anhand von Fig. 3a bis 3e noch deutlicher wird, ebenfalls eine in Fig. 2 nicht gezeigte Einrichtung vorhanden, um den Übertrag an dem Übertrag-Ausgang eines Addiererblocks, wie z. B. dem Übertrag-Ausgang 216 des Addiererblocks 200, daran zu hindern, in den Übertrag-Eingang des darüberliegenden Addiererblocks einzutreten.

Die Fig. 3a bis 3e zeigen eine Sequenz der Registerinhalte, die auftritt, wenn die einzelnen erfindungsgemäßen Maßnahmen durchgeführt werden, um eine adaptive Behandlung der Addiererblöcke zu erreichen, die unterhalb des Addiererblocks liegen, der das niederstwertige Bit enthält. Bevor näher auf die Fig. 3a bis 3e eingegangen wird, sei darauf hingewiesen, daß bei der bevorzugten Elementarzelle des Addierers, wie z. B. den Elementarzellen 16, 17, 22, 24 von Fig. 1, folgender Aufbau bevorzugt wird. Eine bevorzugte Elementarzelle umfaßt neben dem eigentlichen Addierer zum Addieren der Operanden a, b, die Operandenregister selbst. Wenn beispielsweise ein Zwei-Operanden-Addierer betrachtet wird, so enthält eine Elementarzelle einen Speicherplatz für das entsprechende Bit des ersten Operanden, einen Speicherplatz für das entsprechende Bit des zweiten Operanden sowie einen Speicherplatz für das entsprechende durch Addition des ersten und zweiten Operanden erhaltene Summenbit c. Wenn ein Drei-Operanden-Addierer betrachtet wird, so enthält jede Elementarzelle drei Register-Speicherplätze für die drei Eingangs-Operanden und eine Registerzelle für das entsprechende Ausgangs-Bit. In diesem Fall besteht der Addierer selbst, wie es bekannt ist, aus einem Halbaddierer und einem nachgeschalteten Volladdierer.

Fig. 3a zeigt aufeinander gestapelt die Registerbelegung eines ersten Operanden a. Für das in Fig. 3a gezeigte Beispiel wird davon ausgegangen, daß das Rechenwerk insgesamt fünf Addiererblöcke umfaßt, wobei sich das niederstwertige Bit des ersten Operanden a in dem dritten Addiererblock des Rechenwerks befindet.

In Fig. 3b ist das zweite Operandenregister des Rechenwerks gezeigt. Auch das niederstwertige Bit des zweiten Operanden b befindet sich im dritten Addiererblock. Es sei darauf hingewiesen, daß aussagekräftige Bits in den Fig. 3a und 3b mit Kreuzen gekennzeichnet sind, während nicht-verwendete Bits bei dem hier gezeigten Ausführungsbeispiel auf einen Wert von "0" in den entsprechenden Registern gesetzt sind.

Eine Inversion des zweiten Operandenregisters führt zu der Situation, wie sie in Fig. 3c gezeigt sind, d. h. daß alle Bits unterhalb des niederstwertigen Bits, also alle Bits des ersten und des zweiten Addiererblocks zu 1 werden.

Das erfindungsgemäße Rechenwerk würde nunmehr sowohl für den ersten Addiererblock als auch für den zweiten Addiererblock ein Panik-Signal erzeugen, da die Propagate-Parameter der beiden Operanden a und b für den ersten und den zweiten Addiererblock gleich 1 sind. Diese Panik-Signale würden bei dem in Fig. 3c gezeigten Fall nicht nur eine Panik, sondern sogar eine Doppel-Panik auslösen, die jedoch "künstlich" erzeugt ist. Um diesen Fall zu verhindern, werden, wie es in Fig. 3d gezeigt ist, die Panik-Signale des ersten und des zweiten Addiererblocks abgeschaltet, d. h. die Übertrag-Durchlauf-Ausgänge des ersten und des zweiten Addiererblocks werden deaktiviert. Darüber hinaus ist in Fig. 3d der bevorzugte Fall gezeigt, bei dem auch das Panik-Signal des dritten Addiererblocks, also des Blocks, in dem sich das LSB befindet, deaktiviert ist.

Um die Bits in den Addiererblöcken Nr. 1 und Nr. 2 wieder auf ihre Ausgangssituation zurückzubringen, d. h. den Wert von "0", wird ferner in jeden Übertrag-Eingang der entsprechenden Addiererblöcke Nr. 1 und Nr. 2 ein Übertrag $C_{ein}$ eingespeist, wie es in Fig. 3e gezeigt ist. Ferner wird, wie es ebenfalls in Fig. 3e gezeigt ist, in den dritten Addiererblock, in dem sich das LSB befindet, ebenfalls ein Übertrag eingespeist, um die Addition von "1" bei der diskutierten Subtraktionsformel zu berücksichtigen. Schließlich wird, wie es in Fig. 3e bei 250 gezeigt ist, eine Übertrag-Sperre für sämtliche Addiererblöcke unterhalb des Addiererblocks, der das LSB enthält, eingeführt, derart, daß das Übertrag-Ausgangssignal eines Blocks in den Übertrag-Eingang des nächsthöheren Blocks eintreten kann.

Bezugszeichenliste

| | |
|---|---|
| 10 | erster Addiererblock |
| 12 | zweiter Addiererblock |
| 14 | dritter Addiererblock |
| 16 | Einzeladdierer |
| 17 | zweit-niederstwertige Stelle des ersten Addiererblocks |
| 18 | Summen-Bit-Register |
| 20 | höchstwertige Elementarzelle des zweiten Addiererblocks |
| 22 | niederstwertige Stelle des dritten Addiererblocks |
| 24 | niederstwertige Stelle des zweiten Addiererblocks |
| 26 | erste Durchlauf-Einrichtung |
| 28 | zweite Durchlauf-Einrichtung |
| 30 | dritte Durchlauf-Einrichtung |
| 32 | Carry-Bypass-Steuersignale |
| 34 | Carry-Steuerung |
| 36 | Carry-Steuerung |
| 38 | Carry-Steuerung |
| 40 | Carry-Bypass des ersten Addiererblocks |
| 42 | Carry-Bypass des zweiten Addiererblocks |
| 44 | Carry-Bypass des dritten Addiererblocks |
| 50 | Steuereinrichtung |
| 52 | Taktgenerator |
| 54 | Taktleitung für den ersten Addiererblock |
| 56 | Taktleitung für den zweiten Addiererblock |
| 58 | Taktleitung für den dritten Addiererblock |
| 60 | Normal-Geschwindigkeit |
| 62 | Panik-Geschwindigkeit |
| 64 | Doppel-Panik-Geschwindigkeit |
| 120 | Eingangs-Übertrag für den zweiten Addiererblock |
| 140 | Eingangs-Übertrag für den dritten Addiererblock |
| 200 | Addiererblock |
| 202 | Addiererblock |
| 204 | Addiererblock |
| 206 | Addiererblock |
| 208 | Addiererblock |
| 210 | Addiererblock |
| 212 | Addiererblock |
| 214 | Übertrag-Eingang |
| 216 | Übertrag-Ausgang |
| 218 | Übertrag-Durchlauf-Ausgang |
| 220 | Überlauf-Deaktivierungsgatter |
| 222 | Deaktivierungsgatter-Steuersignal |

224   LSB-Block-Bestimmungsregister
230   Einrichtung zum Einspeisen eines Übertrags
250   Übertrag-Ausgangs-Sperre
260   Panik-Signal der ersten Durchlauf-Einrichtung
280   Panik-Signal der zweiten Durchlauf-Einrichtung
300   Panik-Signal der dritten Durchlauf-Einrichtung

**Patentansprüche**

1.   Rechenwerk zur Zweierkomplement-Subtraktion mit folgenden Merkmalen:

     einer Mehrzahl von Addiererblöcken (200, 202, 204, 206, 208, 210, 212), wobei jeder Addiererblock eine Mehrzahl von Einzeladdierern (16, 17, 20, 22), einen Übertrag-Eingang (214), einen Übertrag-Ausgang (216) und einen Übertrag-Durchlauf-Ausgang (218) aufweist, wobei eine Gesamtanzahl der Einzeladdierer der Mehrzahl von Addiererblöcken größer ist als eine Anzahl von Stellen eines zu subtrahierenden Operanden (b), wobei durch ein Signal an dem Übertrag-Durchlauf-Ausgang (218) eines Addiererblocks (200) anzeigbar ist, daß ein Übertrag den Addiererblock durchläuft;
     einem Taktgenerator (52), der zum Speisen der Addiererblöcke mit zu verarbeitenden Operanden gemäß einem Takt angepaßt ist; und
     einer Steuereinrichtung (50), die zum Steuern des Taktgenerators (52) angepaßt ist, so, daß der Takt, mit dem die zu verarbeitenden Operanden eingespeist werden, verlangsamt wird, wenn ein Signal an einem Übertrag-Durchlauf-Ausgang aktiv ist;
     **gekennzeichnet durch**
     eine Einrichtung (224), die zum Bestimmen angepasst ist, in welchem Addiererblock (206) der Addiererblöcke ein niederstwertiges Bit des zu subtrahierenden Operanden (b) angeordnet ist;
     eine Einrichtung (220), die zum Deaktivieren des Übertrag-Durchlauf-Ausgangs (218) von einem oder mehreren Addiererblöcken angepasst ist, die für bezüglich des Addiererblocks, in dem sich das niederstwertige Bit des zu subtrahierenden Operanden befindet, niederwertige Stellen vorgesehen sind; und
     eine Einrichtung (230), die zum Einspeisen eines Übertrags ($C_{ein}$) in den Übertrag-Eingang des Addiererblocks angepasst ist, in dem sich das niederstwertige Bit des zu subtrahierenden Operanden (b) befindet.

2.   Rechenwerk nach Anspruch 1, das ferner folgendes Merkmal aufweist:

     eine Einrichtung (230), die zum Einspeisen eines Übertrags ($C_{ein}$) in den Übertrag-Eingang (214) des oder der Addiererblöcke angepasst ist, die für niederwertige Stellen bezüglich des Addiererblocks vorgesehen ist bzw. sind, in dem sich das niederstwertige Bit des zu subtrahierenden Operanden (b) befindet.

3.   Rechenwerk nach einem der vorhergehenden Ansprüche, mit dem ein Operand b von einem Operanden a subtrahierbar ist, wobei die Subtraktion gemäß folgender Gleichung ausführbar ist:

$$c = a + (\overline{b} + 1),$$

wobei c ein Ergebnis der Subtraktion ist, und wobei ein Zeichen "-" eine Inversion darstellt.

4.   Rechenwerk nach einem der Ansprüche 1 bis 3,
     bei dem ein Einzeladdierer ein erstes Register für ein erstes Operandenbit, ein zweites Register für ein zweites Operandenbit, ein Addierwerk und ein Ausgangsregister (18) für ein Ergebnisbit der Operation umfaßt.

5.   Rechenwerk nach Anspruch 4, das ferner eine Einrichtung, die zum Invertieren des zweiten Registers jedes Einzeladdierers der Mehrzahl von Addiererblöcken angepasst ist, aufweist.

6.   Rechenwerk nach einem der vorhergehenden Ansprüche, bei der die Einrichtung zum Deaktivieren folgende Merkmale aufweist:

     für jeden Addiererblock, eine Schalteinrichtung (220) mit einem Eingang (218), einem Ausgang und einem Steuereingang (222), wobei an den Eingang ein Signal eines Übertrag-Durchlauf-Ausgangs anlegbar ist, und wobei an den Steuereingang ein Deaktivierungssignal für den Addiererblock anlegbar ist.

7. Rechenwerk nach Anspruch 6,
bei dem die Einrichtung zum Bestimmen ein Register (224) mit einer Anzahl von Registerzellen umfaßt, wobei die Anzahl von Registerzellen gleich einer maximalen Anzahl der Addiererblöcke ist, deren Übertrag-Durchlauf-Ausgang deaktivierbar ist, wobei ein Bit in einer Registerzelle mit einem ersten Zustand auf einen Addiererblock hinweist, dessen Übertrag-Durchlauf-Ausgang zu deaktivieren ist, und wobei ein Bit in einer Registerzelle mit einem zweiten Zustand auf einen Addiererblock hinweist, dessen Übertrag-Durchlauf-Ausgang nicht zu deaktivieren ist, wobei für jede Registerzelle eine Ausgangsleitung vorgesehen ist, und wobei jede Ausgangsleitung mit dem Steuereingang der Schalteinrichtung verbunden ist, die einem Addiererblock zugeordnet ist.

8. Rechenwerk nach einem der vorhergehenden Ansprüche, das ferner folgendes Merkmal aufweist:

eine Einrichtung, die zum Deaktivieren des Übertrag-Durchlauf-Ausgangs des Addiererblocks angepasst ist, in dem das niederstwertige Bit des zu subtrahierenden Operanden (b) angeordnet ist.

9. Rechenwerk nach einem der vorhergehenden Ansprüche,
bei dem der Taktgenerator (52) angeordnet ist, um in dem Fall, in dem kein Übertrag-Durchlauf-Ausgang der Mehrzahl von Addiererblöcken aktiv ist, den Takt so zu wählen, daß sich innerhalb einer Taktperiode ein Übertrag durch einen vollständigen Addiererblock und zumindest einen Teil eines vorausgehenden Addiererblocks ausbreiten kann, bei dem der Taktgenerator (52) ferner angeordnet ist, um in dem Fall, in dem ein Übertrag-Durchlauf-Ausgang aktiv ist, den Takt so zu steuern, daß sich innerhalb einer Taktperiode ein Übertrag durch zwei vollständige Blöcke und zumindest einen Teil eines vorausgehenden Blocks ausbreiten kann, wobei die Taktperiode jedoch kürzer als die Zeit ist, die ein Übertrag benötigt, um sich über drei vollständige Blöcke und zumindest einen Teil eines vorausgehenden Blocks auszubreiten, und
bei dem der Taktgenerator ferner angeordnet ist, um in den Fall, in dem zwei Übertrag-Durchlauf-Ausgänge von zwei benachbarten Addiererblöcken aktiv sind, den Takt so zu steuern, daß sich innerhalb einer Taktperiode ein Übertrag durch zumindest drei vollständige Blöcke und einen Teil eines den drei vollständigen Blöcken vorausgehenden Blocks ausbreiten kann.

10. Verfahren zum Zweierkomplement Subtrahieren eines zweiten Operanden (b) von einem ersten Operanden (a) mit einem Rechenwerk mit einer Mehrzahl von Addiererblöcken (200, 202, 204, 206, 208, 210, 212), wobei jeder Addiererblock eine Mehrzahl von Einzeladdierern (16, 17, 20, 22), einen Übertrag-Eingang (214), einen Übertrag-Ausgang (216) und einen Übertrag-Durchlauf-Ausgang (218) aufweist, wobei eine Gesamtanzahl der Einzeladdierer der Mehrzahl von Addiererblöcken größer ist als eine Anzahl von Stellen eines zu subtrahierenden Operanden (b), wobei durch ein Signal an dem Übertrag-Durchlauf-Ausgang (218) eines Addiererblocks (200) anzeigbar ist, daß ein Übertrag den Addiererblock durchläuft, mit folgenden Schritten:

Steuern eines Takts, mit dem zu verarbeitende Operanden eingespeist werden, so daß der Takt verlangsamt wird, wenn ein Signal an einem Übertrag-Durchlauf-Ausgang aktiv ist;
**gekennzeichnet durch** folgende Schritte:
Bestimmen, in welchem Addiererblock ein niederstwertiges Bit des zu subtrahierenden Operanden angeordnet ist;
Deaktivieren des Übertrag-Durchlauf-Ausgangs von einem oder mehreren Addiererblöcken, die für bezüglich des Addiererblocks, in dem sich das niederstwertige Bit des zu subtrahierenden Operanden (b) befindet, niederwertige Stellen vorgesehen sind; und
Einspeisen eines Übertrags in den Übertrag-Eingang des Addiererblocks, in dem sich das niederstwertige Bit des zu subtrahierenden Operanden (b) befindet.

## Revendications

1. Unité de calcul pour la soustraction à complément de deux comportant les éléments caractéristiques suivants :

une pluralité de blocs d'additionneur (200, 202, 204, 206, 208, 210, 212), chaque bloc d'additionneur comportant une pluralité d'additionneurs individuels (16, 17, 21, 22), une entrée de report (214), une sortie de report (216) et un sortie de passage de report (218), le nombre total des additionneurs individuels de la pluralité de blocs d'additionneur étant supérieur au nombre de positions d'un opérande à soustraire (b),

un signal permettant d'indiquer à la sortie de passage de report (218) d'un bloc d'additionneur (200) qu'un report passe par le bloc d'additionneur ;

un générateur de cadencement (52) qui permet de délivrer des opérandes à traiter aux blocs d'additionneur à un certain cadencement ; et

un dispositif de commande (50), qui est destiné à commander le générateur de cadencement (52) de sorte que le cadencement avec lequel des opérandes à traiter sont délivrés est réduit lorsqu'un signal à une sortie de passage de report est actif ;

**caractérisée par**

un dispositif (224) qui est destiné à déterminer dans quel bloc d'additionneur (206) des blocs d'additionneur se trouve un bit de plus faible poids de l'opérande à soustraire (b) ;

un dispositif (220) qui est destiné à désactiver la sortie de passage de report (218) d'un ou plusieurs blocs d'additionneur qui sont prévus pour des positions de poids inférieur par rapport au bloc d'additionneur où se trouve le bit de plus faible poids de l'opérande à soustraire ; et

un dispositif (230) qui est destiné à délivrer un report ($C_{ein}$) à l'entrée de report du bloc d'additionneur où se trouve le bit de plus faible poids de l'opérande à soustraire (b).

2. Unité de calcul selon la revendication 1 qui comporte les éléments caractéristiques suivants :

un dispositif (230) qui est destiné à délivrer un report ($C_{ein}$) à l'entrée de report (214) du ou des blocs d'additionneur qui sont prévus pour des positions de poids inférieur par rapport au bloc d'additionneur où se trouve le bit de plus faible poids de l'opérande à soustraire (b).

3. Unité de calcul selon l'une des revendications précédentes permettant de soustraire un opérande b d'un opérande a, la soustraction pouvant être réalisée conformément à l'équation suivante :

$$c = a + (\overline{b} + 1),$$

c est le résultat de la soustraction et le signe « ⁻ » représente une inversion.

4. Unité de calcul selon l'une des revendications 1 à 3, dans laquelle un additionneur individuel comporte un premier registre pour un premier bit d'opérande, un deuxième registre pour un deuxième bit d'opérande, une unité d'addition et un registre de sortie (18) pour un bit de résultat de l'opération.

5. Unité de calcul selon la revendication 4 qui est comporte en outre un dispositif qui est destiné à inverser le deuxième registre de chaque additionneur individuel de la pluralité de blocs d'additionneur.

6. Unité de calcul selon l'une des revendications précédentes, dans laquelle le dispositif de désactivation comporte les éléments caractéristiques suivants :

pour chaque bloc d'additionneur, un dispositif de commutation (220) présentant une entrée (218), une sortie et une entrée de commande (222), un signal d'une sortie de passage de report pouvant être appliqué à l'entrée, et un signal de désactivation du bloc d'additionneur pouvant être appliqué au dispositif de commande.

7. Unité de calcul selon la revendication 6, dans laquelle
le dispositif de détermination comprend un registre (224) comportant un certain nombre de cellules de registre, le nombre de cellules de registre étant égal au nombre maximum de blocs d'additionneur dont la sortie de passage de report peut être désactivée, un bit d'une cellule de registre signalant par un premier état un bloc d'additionneur dont la sortie de passage de report doit être désactivée, et un bit d'une cellule de registre signalant par un deuxième état un bloc d'additionneur dont la sortie de passage de report ne doit pas être désactivée, une ligne de sortie étant prévue pour chaque cellule de registre, et chaque ligne de sortie étant reliée à l'entrée de commande du dispositif de commutation qui est associé à un bloc d'additionneur.

8. Unité de calcul selon l'une des revendications précédentes qui comporte en outre l'élément caractéristique suivante :

un dispositif qui est destiné à désactiver la sortie de passage de report du bloc d'additionneur où se trouve le bit de plus faible poids de l'opérande à soustraire (b).

9. Unité de calcul selon l'une des revendications précédentes, dans laquelle

le générateur de cadencement (52) permet de choisir le cadencement, dans le cas où aucune sortie de passage de report de la pluralité de blocs d'additionneur n'est active, de telle sorte que dans une période de cadencement un report peut passer un bloc d'additionneur complet et par au moins une partie d'un bloc d'additionneur précédent, le générateur de cadencement (52) permet en outre de commander le cadencement, dans le cas où une sortie de passage de report est active, de telle sorte que pendant une période de cadencement un report peut passer par deux blocs complets et par au moins une partie d'un bloc précédent, la période de cadencement étant cependant plus courte que le temps nécessaire à un report pour passer par trois blocs complets et par au moins une partie d'un bloc précédent, et

le générateur de cadencement permet en outre de commander le cadencement, dans le cas où deux sorties de passage de report de deux blocs d'additionneur voisins sont actives, de telle sorte que pendant une période de cadencement un report peut passer par au moins trois blocs complets et par une partie d'un bloc précédant les trois blocs complets.

10. Procédé de soustraction à complément de deux d'un deuxième opérande (b) d'un premier opérande (a) avec une unité de calcul comportant une pluralité de blocs d'additionneur (200, 202, 204, 206, 208, 210, 212), chaque bloc d'additionneur comportant une pluralité d'additionneurs individuels (16, 17, 20, 22), une entrée de report (214), une sortie de report (216) et une sortie de passage de report (218), le nombre total d'additionneurs individuels de la pluralité de blocs d'additionneur étant supérieur au nombre de positions d'un opérande à soustraire (b), un signal permettant d'indiquer à la sortie de passage de report (218) d'un bloc d'additionneur (200) qu'un report passe par le bloc d'additionneur, ledit procédé comportant les étapes suivantes consistant à :

commander un cadencement avec lequel des opérandes à traiter sont délivrer de sorte que le cadencement est ralenti lorsqu'un signal à une sortie de passage de report est actif ;

**caractérisé par** les étapes suivantes consistant à :

déterminer dans quel bloc d'additionneur se trouve un bit de plus faible poids de l'opérande à soustraire ;
désactiver la sortie de passage de report d'un ou plusieurs blocs d'additionneur qui sont prévus pour des positions de poids inférieur par rapport au bloc d'additionneur dans lequel se trouve le bit de plus faible poids de l'opérande à soustraire (b) ; et
délivrer un report à l'entrée de report du bloc d'additionneur où se trouve le bit de plus faible poids de l'opérande à soustraire (b).

**Claims**

1. Calculating unit for two's complement subtraction, comprising:

a plurality of adder blocks (200, 202, 204, 206, 208, 210, 212), wherein each adder block comprises a plurality of single adders (16, 17, 20, 22), a carry input (214), a carry output (216) and a carry pass output (218), wherein a total number of single adders of the plurality of adder blocks is greater than a number of digits of an operand (b) to be subtracted, wherein a signal at the carry pass output (218) of an adder block (200)is indicative of a carry passing through the adder block;
a clock generator (52) adapted for feeding the adder blocks with operands to be processed according to a clock; and
control means (50) adapted for controlling the clock generator (52) such that the clock with which the operands to be processed are fed in, is decelerated, when the signal at the carry pass output is active;
**characterized by**
means (224) adapted for determining in which adder block (206) of the adder blocks a least significant bit of the operand (b) to be subtracted is disposed;
means (220) adapted for deactivating the carry pass output (280) of one or several adder blocks, which are provided for lower order digits with regard to the adder block, in which the least significant bit of the operand to be subtracted is; and
means (230) adapted for feeding in a carry ($C_{in}$) into the carry input of the adder blocks, in which the least significant bit of the operand (b) to be subtracted is.

**2.** Calculating unit according to claim 1, further comprising:

means (230) adapted for feeding in a carry ($C_{in}$) into the carry input (214) of the adder block or blocks, provided for lower order digits with regard to the adder block, in which the least significant bit of the operand (b) to be subtracted is.

**3.** Calculating unit according to one of the previous claims, with which an operand (b) can be subtracted from an operand (a), wherein the subtraction can be carried out according to the following equation:

$$c = a + (\bar{b} + 1),$$

wherein c is a result of the subtraction, and wherein a character " ⁻ " represents an inversion.

**4.** Calculating unit according to one of claims 1 to 3,
wherein a single adder comprises a first register for a first operand bit, a second register for a second operand bit, an adder unit and an output register (18) for a result bit of the operation.

**5.** Calculating unit according to claim 4, further comprising means adapted for inverting the second register of each single adder of the plurality of adder blocks.

**6.** Calculating unit according to one of the previous claims, wherein means for deactivating comprises:

for each adder block, switch means (220) with an input (218), an output and a control input (222), wherein a signal of a carry pass output can be applied to each input, and wherein a deactivating signal for the adder block can be applied to the control input.

**7.** Calculating unit according to claim 6,
wherein the means for determining comprises a register (224) with a plurality of register cells, wherein the number of register cells is equal to a maximum number of adder blocks, whose carry pass output can be deactivated, wherein a bit in a register cell with a first state refers to an adder block, whose carry pass output is to be deactivated, and wherein a bit in a register cell with a second state refers to an adder block, whose carry pass output is not to be deactivated, wherein an output line is provided for each register cell, and wherein each output line is connected to the control input of the switch means, which is associated to an adder block.

**8.** Calculating unit according to one of the previous claims, further comprising:

means adapted for deactivating the carry pass output of the adder block, in which the least significant bit of the operand (b) to be subtracted is disposed.

**9.** Calculating unit according to one of the previous claims,
wherein the clock generator (52) is disposed to choose the clock in the case where no carry pass output of the plurality of adder blocks is active, such that within one clock period one carry can propagate through a complete adder block and at least part of a previous adder block,
wherein the clock generator (52) is further disposed to control the clock in the case where a carry pass output is active, such that within one clock period a carry can propagate through two complete blocks and at least part of a previous block, wherein the clock period is, however, shorter than the time a carry needs to propagate across three complete blocks and at least part of a previous block, and
wherein the clock generator is further disposed to control the clock in the case where two carry pass outputs of two adjacent adder blocks are active such that within one clock period a carry can propagate through at least three complete blocks and part of one previous block of the three complete blocks.

**10.** Method for two's complement subtracting a second operand (b) from a first operand (a) with a calculating unit with a plurality of adder blocks (200, 202, 204, 206, 208, 210, 212), wherein each adder block comprises a plurality of single adders (16, 17, 20, 22), a carry input (214), a carry output (216) and a carry pass output (218), wherein a total number of single adders of the plurality of adder blocks is greater than the number of digits of an operand (b) to be subtracted, wherein a signal at the carry pass output (218) of an adder block (200) is indicative of a carry passing through the adder block, comprising the steps of:

controlling a clock, by which operands to be processed are fed in, so that the clock is decelerated when a signal is active at a carry pass output;

**characterized by** the steps of:

determining, in which adder block a least significant bit of the operand to be subtracted is disposed;
deactivating the carry pass output of one or several adder blocks, which are provided for lower order digits with regard to the adder block, in which the least significant bit of the operand to be subtracted is; and
feeding in a carry into the carry input of the adder block, in which the least significant bit of the operand (b) to be subtracted is.

FIG 1

FIG 2

|  | a |  | b |  | b̄ |  | c |  |  |  |
|---|---|---|---|---|---|---|---|---|---|---|
| 5. Block | X |  | X |  | X - |  | X |  |  | X |
|  | X |  | X |  | X |  | X |  |  | X |
|  | X |  | X |  | X |  | X |  |  | X |
| 4. Block | X |  | X |  | X |  | X |  |  | X |
|  | X |  | X |  | X |  | X | P→X |  | X |
| 3. Block | X | LSB | X | LSB | X | LSB | X | P |  | X  xxx← $c_{EIN}$ |
|  | 0 |  | 0 |  | 1 →P | | 1 | →X |  | 0  ⌐ 250 |
| 2. Block | 0 |  | 0 |  | 1 |  | 1 |  |  | 0  xxx← $c_{EIN}$ |
|  | 0 |  | 0 |  | 1 →P | | 1 | →X P |  | 0 |
| 1. Block | 0 |  | 0 |  | 1 |  | 1 |  |  | 0 |

$c_{EIN}$ →

## FIG 3A    FIG 3B    FIG 3C    FIG 3D    FIG 3E